# EUROPEAN PATENT APPLICATION

(11) **EP 4 475 016 A1**
(43) Date of publication of application: **11.12.2024**
(21) Application number: 23810988.8
(22) Date of filing: 22.05.2023
(51) Int. Cl.: G06F 21/31

(54) **CIRCUIT BREAKER AND CIRCUIT BREAKER PERMISSION MANAGEMENT METHOD**

(30) Priority: 27.05.2022 CN 202210587926
(71) Applicant: Zhejiang Chint Electrics Co., Ltd., Wenzhou, Zhejiang 325603 (CN)
(72) Inventor: CHEN, Gaofeng, Wenzhou, Zhejiang 325603 (CN); XIAO, Lei, Wenzhou, Zhejiang 325603 (CN); WEI, Jie, Wenzhou, Zhejiang 325603 (CN); ZHANG, Shiwei, Wenzhou, Zhejiang 325603 (CN); CHEN, Longyu, Wenzhou, Zhejiang 325603 (CN); ZHOU, Yuanhao, Wenzhou, Zhejiang 325603 (CN)
(74) Representative: Petraz, Gilberto Luigi
(86) International application number: PCT/CN2023/095456
(87) International publication number: WO 2023/226917

(57) **Abstract**

Disclosed are a circuit breaker permission management method and a circuit breaker. The circuit breaker at least stores a plurality of permission accounts and at least three permission sets, wherein each permission account corresponds to at least one permission set, and each permission account corresponds to one permission set. The circuit breaker permission management method includes the following steps: S1: acquiring an input account, and comparing and verifying the input account sequentially with all the permission accounts until a permission account identical to the input account is found; S2: acquiring the permission set corresponding to the permission account identical to the input account as a current user permission set; and S3: displaying an operation interface based on the current user permission set, and/or authenticating user operation. The present invention realizes hierarchical management of the functions of the circuit breaker simply and quickly in the case of not setting complex user management functions, is low in implementation cost and convenient to use, and has a favorable application value.

## Description

### TECHNICAL FIELD

The present invention relates to the field of low-voltage electrical appliances, and more particularly to a circuit breaker and a circuit breaker permission management method.

### BACKGROUND

Universal circuit breakers are widely used in low-voltage distribution networks, and mainly used in industrial, commercial, high-rise and residential houses and other places, so that circuits and devices are protected from overload, short circuit, undervoltage, overvoltage and other faults. Because the environment in which a circuit breaker is actually located is no longer single, anyone may log in or use the circuit breaker, so it is prone to incorrect operation of the circuit breaker, which can lead to the inability to protect devices in a power system and even cause safety accidents.

In order to solve the above problems, the traditional method is to set a password in a circuit breaker controller. An operation interface may be displayed just by inputting the password in the login interface of the circuit breaker. Compared with a case of no setting of any password, this method can play a certain role in protection. However, in actual use, only one password is assigned to a plurality of operators, which will lead to two problems: one is to give too high permission to operators who are not highly professional, resulting in incorrect operations; and the second problem is that the circuit breaker controller cannot identify who performs what kind of operation, leading to a safety accident and failure to backtrack operation records.

With the development of the age, the requirements for the safety and stability of the power system are getting higher and higher, and the safety of the power system needs to be strengthened urgently. In order to avoid incorrect operations of circuit breakers by non-specialists, universal circuit breakers should have management functions for different levels of permissions. In other fields, for the management of different permissions, more complex user management functions are usually set, and each user sets his/her own password by adding new users, setting different user names and assigning different permissions. This method is too complicated in operation.

### SUMMARY

An object of the present invention is to overcome the defects of the prior art, and to provide a circuit breaker permission management method which is suitable for circuit breakers, as well as a circuit breaker adopting the circuit breaker permission management method.

In order to achieve the above object, the present invention adopts the following technical solutions:
A circuit breaker permission management method, wherein a circuit breaker at least stores a plurality of permission accounts and at least three permission sets, wherein each permission account at least corresponds to one permission set, and each permission account corresponds to one permission set; and the circuit breaker permission management method comprises the following steps:
S1: acquiring an input account, and comparing and verifying the input account sequentially with all the permission accounts until a permission account identical to the input account is found;
S2: acquiring a permission set corresponding to the permission account identical to the input account as a current user permission set; and
S3: displaying an operation interface based on the current user permission set, and/or authenticating user operation.

Preferably, in step S1, an error prompt is given if the permission account identical to the input account is not found, and/or S 1 exits.

Preferably, the circuit breaker also stores at least two sets of access mode permission sets corresponding to an access mode; and
in step S2, the permission set corresponding to the permission account identical to the input account is acquired as a second candidate permission set; an access mode for accessing the circuit breaker is also acquired, and a corresponding access mode permission set is acquired as a first candidate permission set based on the access mode; and an intersection of permission items in the first candidate permission set and the permission items in the second candidate permission set is taken as the current user permission set.

Preferably, the access mode comprises at least two of the following: an NFC, handheld test equipment, an HMI interface, a mobile phone APP, a PC host computer, HPLC, a CAN bus, and RS485; the corresponding access mode permission set comprises at least two of the following: an NFC permission set, a handheld test equipment permission set, an HMI interface permission set, a mobile phone APP permission set, a PC host computer permission set, an HPLC permission set, a CAN permission set and an RS485 permission set; and the at least two access mode permission sets are in one-to-one correspondence with the at least two access modes.

Preferably, the permission set and the access mode permission set each comprises a plurality of permission items; and each permission set and each access mode permission set comprise one or more permission items among "fault query", "parameter query", "test tripping", "exporting system log file", "fault recording analysis", "firmware upgrade", "system setting" and "protection setting", respectively.

Preferably, the three permission sets stored by the circuit breaker are respectively a high-level permission set, an intermediate permission set and a low-level permission set; the plurality of permission accounts stored by the circuit breaker comprises at least one high-level permission account corresponding to the high-level permission set; and the high-level permission set comprises permission management permission items, which have a permission to modify a password corresponding to each permission account, a permission to open or close other permission account functions, and a permission to associate the other permission accounts with the corresponding permission set.

Preferably, the permission account and the input account are either a text password comprising an account number and a password, or a fingerprint password, or a face recognition password, or a voiceprint password, or an NFC card.

The present invention further provides a circuit breaker, comprising a control module, and a storage module, an input module and a communication module that are connected with the control module respectively, the input module is configured to interact with the control module; the control module can be in communication connection with the access module through the communication module; and the control module performs the circuit breaker permission management method according to any one of the above-mentioned.

Preferably, the input module comprises one or more of the following: an HMI liquid crystal touch screen, a fingerprint collection module, a voice command collection module, a face recognition collection module, an NFC communication module, and an infrared communication module.

Preferably, the circuit breaker comprises a controller and a circuit breaker body; the control module, the storage module, the input module and the communication module are arranged in the controller; the controller further comprises a sampling circuit and an execution driving circuit that are respectively connected to the control module; the control module drives a closing mechanism and an opening mechanism by the execution driving circuit, such that the circuit breaker body performs opening and closing operations; the sampling circuit is configured to collect a current and/or voltage signal of a main circuit of the circuit breaker body and transmit the current and/or voltage signal to the control module; and when the control module determines that the circuit has a fault based on the signal collected by the sampling circuit, the circuit breaker body is driven by the execution driving circuit to perform the opening operation.

Compared with the prior art, the circuit breaker permission management method in the present invention adopts at least three types of permission management, wherein the permission sets (high-level/intermediate/low-level) of at least three types of permissions respectively correspond to multiple permission accounts, the circuit breaker permission management method realizes the hierarchical management of the circuit breaker functions simply and quickly, does not need to set complex user management functions, is low in cost and convenient to use, as well as has a good application value.

In particular, and further provides access mode permission sets corresponding to access modes. Permission control is implemented through the combination of access mode permission sets corresponding to a plurality of access modes, which not only gives full play to the functions provided by different access modes more reasonably, but also does not require additional user input from users, and does not need to set different users or passwords for access modes, thereby improving the security and also enhancing the user experience.

### BRIEF DESCRIPTION OF THE DRAWINGS

FIG. 1 is a schematic structural block diagram of a circuit breaker according to an embodiment of the present invention;
FIG. 2 is a schematic structural diagram in which a controller is in communication cooperation with an input module and an access module according to an embodiment of the present invention;
FIG. 3 is a flowchart of an embodiment of the circuit breaker permission management method according to an embodiment of the present invention;
FIG. 4 is a hierarchical diagram of permission management functions according to an embodiment of the present invention; and
FIG. 5 is a flowchart of another embodiment of the circuit breaker permission management method according to an embodiment of the present invention.

### DETAILED DESCRIPTION OF THE INVENTION

The specific implementation of a circuit breaker permission management method of the present invention will be further described below with reference to the embodiments given in the accompanying drawings. The circuit breaker permission management method of the present invention is not limited to the description of the following embodiments.

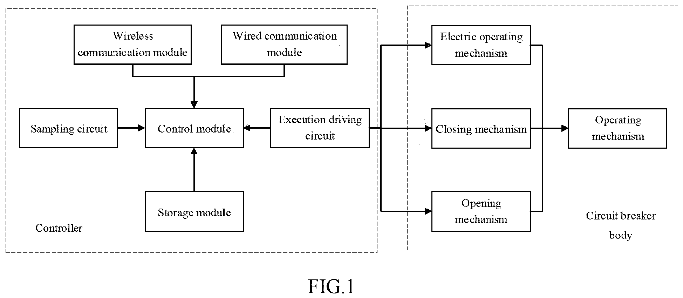

As shown in FIG. 1, a universal circuit breaker of the present embodiment includes a controller and a circuit breaker body. The circuit breaker body includes a contact mechanism, an operating mechanism and an electric operating mechanism. A moving contact and a static contact of the contact mechanism are correspondingly arranged and connected into a main circuit of the circuit breaker; the operating mechanism is connected to the moving contact; the electric operating mechanism is configured to drive the operating mechanism to store energy; when the operating mechanism releases energy, the moving contact is driven to move in contact with the static contact, in order to implement a closing operation of the circuit breaker; and after the operating mechanism releases energy, the electric operation mechanism usually automatically drives the operating mechanism to store energy, so that the operating mechanism is in an energy storage state again. A closing mechanism and an opening mechanism are arranged in the circuit breaker body. The controller is connected to the electric operation mechanism, the closing mechanism and the opening mechanism. The controller can trigger the operating mechanism to store energy through the electric operation mechanism, the closing mechanism triggers the operating mechanism to release energy, such that the circuit breaker is closed. The opening mechanism triggers the operating mechanism to trip, such that the circuit breaker is opened. For example, when an embodiment of the closing mechanism is an electromagnetic closing mechanism, the electromagnetic closing mechanism drives the moving iron core to move through an electromagnetic force of a coil, and triggers the operating mechanism to release energy, such that the circuit breaker is closed. When an embodiment of the opening mechanism is an electromagnetic trip, the electromagnetic trip drives a triggering half shaft of the operating mechanism, so that the operating mechanism trips, and the circuit breaker releases.

The controller includes a control module, and a sampling circuit, an execution driving circuit, a storage module and a communication module that are respectively connected to the control module. The control module drives the closing mechanism and the opening mechanism by the execution driving circuit, such that the circuit breaker body performs opening and closing operations. The sampling circuit is configured to collect a current and/or voltage signal of a main circuit of the circuit breaker body and transmit the current and/or voltage signal to the control module. When the control module determines that the circuit has faults (short circuit, overload, undervoltage, overvoltage, phase failure or other faults) based on the signal collected by the sampling circuit, the circuit breaker body is driven by the execution driving circuit to perform the opening operation. The storage module is configured to store parameter data, current and voltage state data of a circuit, fault data, operation records and the like. The communication module is configured to communicate with a host computer, an external device, circuit breaker accessories, etc. The communication module includes a wireless communication module and/or a wireless communication module.

In order to improve the safety of the circuit breaker and avoid unauthorized opening and closing operations, the circuit breaker is not provided with a mechanical closing button or opening button, or the closing button or the opening button is locked through a mechanical lock, so that a user cannot operate directly. At the same time, the user can use the controller to perform the corresponding opening and closing operations after identity authentication, or change parameters and perform other highly professional operations.

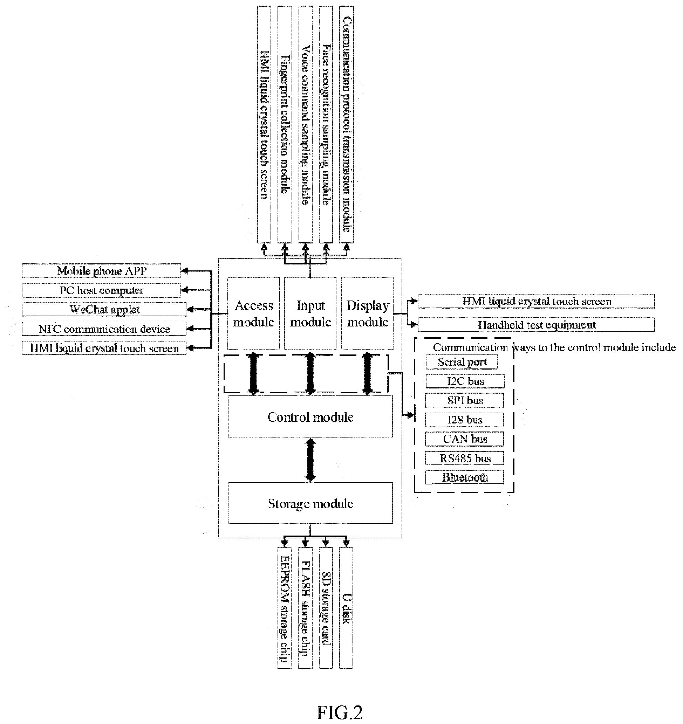

As shown in FIG. 2, the controller in this embodiment further includes an input module, wherein the input module is connected to the control module and configured to interact with the control module. The user can input an input account (account number and password) to be verified through the input module, and/or a control command, and/or identity authentication information. The control module includes at least one microcontroller MCU. Optionally, the input module may be an HMI liquid crystal touch screen, a fingerprint collection module, a voice command collection module, a face recognition collection module, a communication protocol transmission module, etc. The communication protocol transmission module communicates and interacts with the control module based on a corresponding communication protocol. For example, the communication protocol transmission module may include an NFC communication module, an infrared communication module, etc., or may also communicate and interact with the control module via a serial port, Bluetooth, RS485, a CAN bus and other ways. In addition, the user can also communicate and interact with the control module through the access module. Optionally, the access module may be an HMI touch screen interface, an NFC module, a dedicated mobile phone APP interface, a dedicated WeChat applet interface, a dedicated computer upper-computer software interface, etc. The storage module may be a FLASH memory chip, an EEPRO memory M chip, an SD memory card, or a U disk.

Optionally, the input module may establish a connection with the control module via a serial port, an I2C bus, an SPI bus, an I2S bus, a CAN bus, RS485, HPLC, wireless Bluetooth communication, USB communication, etc. The access module may communicate with the control module by wired or wireless means. For example, a dedicated computer may be wired via USB to perform firmware upgrade and other operations.

The circuit breaker in this embodiment further provides a circuit breaker permission management method. A controller of the circuit breaker at least stores a plurality of permission accounts and at least three permission sets, wherein each permission account corresponds to at least one permission set. Each permission account may include an account number and a password, or also include a fingerprint password, a face recognition password and/or a voiceprint password, etc. Each permission account corresponds to one permission set. The circuit breaker permission management method includes the following steps S1-S3.

S1: an input account (account and password) is acquired, and compared and verified sequentially with all the permission accounts pre-stored locally in the controller until a permission account identical to the input account is found; and if the permission account identical to the input account is not found, a prompt of "Account or Password Error" is given, and/or S1 exits. The input account may include an account number and a password, which are text passwords. The user may access this input account through the HMI touch screen interface, the dedicated mobile phone APP interface and other access modules, and input the account number and the password through the corresponding interface. At this time, the verification means that the account number of the input account is compared sequentially with account numbers of a plurality of permission accounts pre-stored in the controller. If there is an account identical to the permission account, the password of the input account is compared with the passwords of the permission accounts, and the verification is passed if the passwords are identical. The input account includes a fingerprint password. The user may input the fingerprint password through the fingerprint collection module. At this time, the fingerprint password of the input account is compared sequentially with fingerprint passwords of the plurality of permission accounts pre-stored in the controller through a fingerprint comparison algorithm, and the verification is passed if the permission accounts are identical. The verification methods of a face recognition password and a voiceprint password are similar to that of the fingerprint password, and will be no longer backtracked.

S2: the permission set corresponding to the permission account identical to the input account is acquired as a current user permission set.

S3: an operation interface is displayed and/or user operation is authenticated based on the current user permission set.

In an embodiment, the controller stores eleven permission accounts and three permission sets. The three permission sets are a high-level permission set, an intermediate permission set and a low-level permission set which correspond to high-level permission accounts, intermediate permission accounts and low-level permission accounts respectively. Each of the eleven permission accounts corresponds to one permission set, wherein at least one permission account corresponds to the high-level permission set, and the permission account corresponding to the high-level permission set may also be called the high-level permission account.

The input account inputted by the user is acquired and compared with the high-level input account. If the input account is the same as the high-level permission account, the authentication is successful, and the high-level permission set is read as the current user permission set.

If the input account is different from the high-level input account, the input account is compared sequentially with the other ten permission accounts. If the account and the password of the input account are the same as those of one of the permission accounts, the authentication is successful, and the permission set corresponding to this permission account is read as the current user permission set.

If the authentication is unsuccessful, a prompt of "Account or Password Error" is given, or the authentication exits, or the user is allowed only to perform routine operations without logging in.

After the authentication is successful, the corresponding operation interface is displayed or the user operation is authenticated based on the current user permission set, and the user is allowed only to perform operations allowed in the current user permission set.

This embodiment is illustrated by taking the input account in a textual form that includes an account number and a password as an example. It should be noted that the permission account and the input account number may also be authenticated for a fingerprint mode or a face recognition mode or a voice mode or a NFC card mode and a communication protocol mode (Modbus/CAN/HPLC/DLT698/DLT645 and other communication protocols). The corresponding account may be acquired through the HMI LCD touch screen, the fingerprint collection module, the face recognition collection module, the voice command collection module, or via a mobile phone or computer and a communication protocol (Modbus/CAN/HPLC/DLT698/DLT645 and other communication protocols).

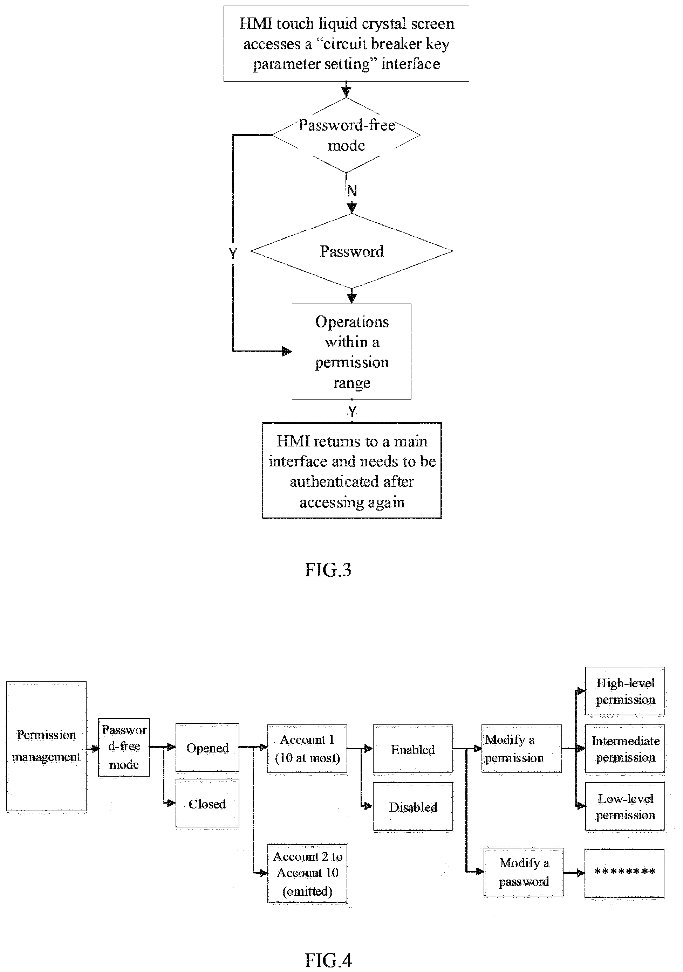

In the embodiment as shown in FIGS. 3-4, the circuit breaker controller in this embodiment has three types of permissions: "high-level permission", "intermediate permission" and "low-level permission", corresponding to three permission sets stored in the circuit breaker controller. Referring to FIG. 4, the three permission sets are the high-level permission set, the intermediate permission set, and the low-level permission set, which represent three permission scopes, that can correspondingly perform "all functions", "most functions", and "small part of the functions" of the circuit breaker. The circuit breaker controller also stores at least one high-level permission account corresponding to the high-level permission set, also known as an administrator account, and the remaining ten permission accounts may be set as needed, also known as operator accounts which may correspond to one of the high-level permission set, the intermediate permission set and the low-level permission set. The "high-level permission" role may be an equipment administrator, that is, the high-level permission account, which can perform permission management on the account and operations on all functions of the controller (see Table 1). The "intermediate permission" role may be a "team leader of a workshop", which can perform operations other than the highest permission, and has a permission second only to an administrator. The "low-level permission" role may be a worker on the workshop and can only view controller information.

The user may modify the password and permission level (high/intermediate/low) corresponding to each permission account through a permission management function provided by the circuit breaker controller, and turn on or off a permission account function, and the "permission management" can be used to associate other permission accounts with the corresponding permission set. The permission management function can only be operated by the high-level permission account, that is, the high-level permission set includes permission management permission items, the permission management permission items having the permission to modify the password corresponding to each permission account, the permission to turn on or off other permission account functions, and the permission to associate other permission accounts with the corresponding permission set. When the circuit breaker is successfully verified and a login person has the high-level permission, a "permission management" interface of the circuit breaker access module can be accessed.

The "permission management" interface has ten permission management sub-interfaces from "Account 1" to "Account 10", in which the passwords and permission levels can be modified in the "Account 1" to "Account 10" sub-interfaces, and the permission sets can be associated with the accounts. Then, the circuit breaker is logged in through the account, and the circuit breaker access module only displays the operation interface corresponding to the permission set. "Account 1" to "Account 10" may be enabled/disabled. The user may log in to the controller by inputting the enabled permission account, and the user inputs the disabled permission account. When the controller fails to log in even if the account and password are correct, a prompt of "the account you entered is not enabled" is given, and/or an input account interface exits.

Preferably, the circuit breaker controller has a "password-free mode", which can be enabled or disabled by the permission management function. If the "password-free mode" is enabled, the user will no longer perform authentication through the input account when operating through the circuit breaker controller, and any person can access all the operation interfaces of the circuit breaker through the input module and the access module. If the "password-free mode" is disabled, the user needs to perform authentication through the input account to acquire the corresponding permission set and authenticate the permission.

The circuit breaker controller in this embodiment may communicate with the control module through the input module or the access module, and perform authentication and operation, including the following steps:
the circuit breaker controller establishes communication with the access module and prompts for the input account; or the circuit breaker controller establishes communication with the input module and displays and/or prompts for the input account; the circuit breaker controller compares and verifies the input account sequentially with all the permission accounts stored by a storage module, acquires a permission set corresponding to the permission account identical to the input account, and replies to a verification result; and when the verification result is successful, the access module or the input module implements the login to the circuit breaker controller based on the verification result, and the access module or the input module displays an operation interface corresponding to its permission based on the verified permission set.

As shown in FIG. 3, in this embodiment, the user accesses a "circuit breaker key parameter setting" interface through the HMI liquid crystal touch screen; the control module first checks whether the "password-free mode" is enabled, if yes, allows the user to perform the corresponding operations, and if not, prompts the user to enter an account (account number and password); the control module compares the acquired input account sequentially with a plurality of different permission accounts stored locally in the controller; firstly, an account number of the input account is compared sequentially with account numbers of a plurality of permission accounts; after a permission account identical to this account number is found, the password of the input account is compared with the password of this permission account; if the passwords are also identical, the authentication is passed, and the permission set corresponding to this permission account is acquired as the current user permission set; and if the authentication is not passed after this input account is compared with the eleven permission accounts, a prompt of "Account/Password Error" exits.

If the input account is authenticated to be passed against one of the permission accounts, the corresponding permission set is read as the current user permission set; whether a "circuit breaker key parameter setting" permission is within the current user permission set is checked; if so, the user is allowed to operate; and if not, a prompt of "No permission" is displayed. When the user operates the circuit breaker based on its permission range via the HMI LCD touch screen, the control module performs the corresponding operations and stores operation records in the storage module for backtracking.

If the user has no operation within a preset time and does not return to a main interface, the control module will then automatically return to the main interface, and needs to re-authenticate and authenticate the identity when accessing again.

Compared with the prior art, the circuit breaker permission management method in this embodiment adopts three types of permission management, wherein the permission sets (high-level/intermediate/low-level) of three types of permissions respectively correspond to eleven permission accounts (accounts and passwords), among which at least one of the permission accounts is an administrator account, and the others are operator accounts. Therefore, the circuit breaker permission management method realizes the hierarchical management of the circuit breaker functions simply and quickly, does not need to set complex user management functions, is low in cost and convenient to use, and has a good application value. This method supports the use of password, fingerprint or face recognition and other ways to verify and acquire the permission set corresponding to the permission account, avoiding security accidents caused by incorrect operations.

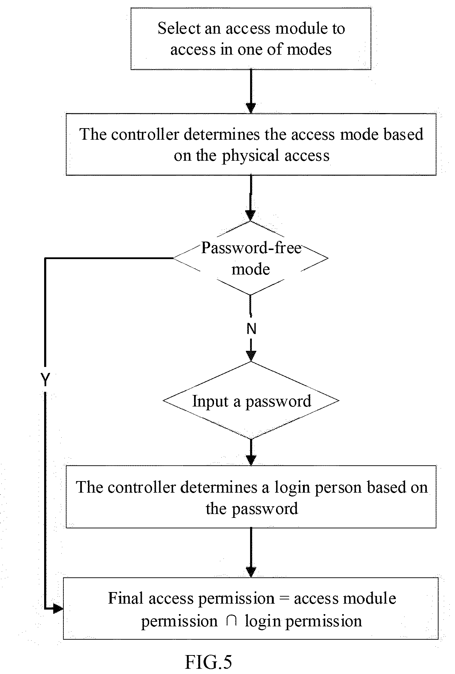

According to another embodiment as shown in FIG. 5 and Table 1-2, the circuit breaker controller in this embodiment supports communication with the control module through a variety of ways such as the input module and the access module, and then performs authentication and operation. In particular, the circuit breaker controller in this embodiment also provides a multi-access-mode permission management method, wherein the circuit breaker controller not only stores the permission sets corresponding to the permission accounts, also known as account permission sets, but also stores at least two access mode permission sets corresponding to the access modes.

As shown in an "account permission set and permission item corresponding table" in Table 1, the account permission sets include a high-level permission set, an intermediate permission set, and a low-level permission set; each permission set includes a plurality of permission items; the permission items that can be configured by each permission set include permission items such as "fault inquiry", "parameter query", "test tripping", "exporting system log file", "fault recording analysis", "firmware upgrade", "system setting", "protection setting", etc.; and different permission sets may have the operation permissions for different permission items. For example, in this embodiment, the low-level permission set only includes operation permissions for the two permission items of "fault query" and "data query"; the intermediate permission set includes the permission items of the low-level permission set, as well as the permission item of "test tripping"; and the high-level permission set includes the permission items of the intermediate permission set, as well as the permission items such as "export system log file", "fault recording analysis", "firmware upgrade", "system setting", and "protection setting". As shown in an "access mode permission set and permission item corresponding table" in Table 2, the access modes in this embodiment include NFC, handheld test equipment, an HMI interface, a mobile phone APP, a PC host computer, HPLC, a CAN bus, RS485 and the like.

A shown in the "access mode permission set and permission item corresponding table" in Table 2, an access mode permission set correspondingly includes an NFC permission set, a handheld test equipment permission set, an HMI interface permission set, a mobile phone APP permission set, a PC host computer permission set, and a wired interface access permission set (HPLC permission set/CAN permission set/RS485 permission set); the permission items in the NFC permission set include "fault query" and "parameter query", but the corresponding operation of "test tripping" cannot be carried out to improve the security; the permission items in the handheld test equipment permission set include "fault query", "parameter query", and "test tripping"; the permission items in the HMI interface permission set include "fault query", "parameter query", "system setting", and "protection setting"; and the permission items in the PC host computer permission set include "fault query", "parameter query", "test tripping", "exporting system log file", "fault recording analysis", "firmware upgrade", "system setting", "protection setting" and other permission items.

In addition, the corresponding permission item may also be set according to the characteristics of each access mode. For example, because a condition that a certain access mode of the access module provides functions is limited, when the HMI liquid crystal screen is used, system logs cannot be viewed conveniently due to a limited screen size, but can be viewed more appropriately by using the dedicated mobile phone APP. For example, when the mobile phone APP is used to connect the circuit breaker via Bluetooth to carry out data analysis, it is impossible to display a large number of parameters in the same interface for analysis due to the limited screen size. At this time, it is more appropriate to connect to the circuit breaker via USB and cooperate with a dedicated PC host computer for data analysis. In summary, if the login account has a high-level permission, but the access mode does not support all the functions of the high-level permission, the permission function is backward compatible, and only the functions jointly supported by the account permission and the access mode can be implemented. The wired interface access permission set includes a permission item of "fault recording analysis", which can not only improve the security based on the permission management, but also reasonably exert the functions that can be provided by different access modes to enhance the user experience.

**Table 1: Account permission set and permission item corresponding table**

| Account permission level (configurable) | | |
|---|---|---|
| High-level permission | | |
| Intermediate permission | | Protection setting |
| | | System setting |
| Low-level permission | Test tripping | Firmware upgrade |
| | | Fault recording analysis |
| Parameter query | | Export system log |
| Fault query | | |

| | Local access | | | | | Remote access |
|---|---|---|---|---|---|---|
| | NFC | Handheld testing equipment | HMI interface | Mobile phone APP | PC upper-com puter | RS485/HPL C/CAN |
| Parameter query | √ | √ | √ | √ | √ | |
| Fault query | √ | √ | √ | √ | √ | √ |
| Test tripping | | √ | | | √ | √ |
| Export system logs | | | | √ | √ | √ |
| Fault recording analysis | | | | | √ | √ |
| Firmware upgrade | | | | √ | √ | √ |
| System setting | | | √ | √ | √ | √ |
| Protection setting | | | √ | √ | √ | √ |

| | | | | | | |
|---|---|---|---|---|---|---|
| Table 2: Access mode permission set and permission item corresponding table | | | | | | |

It should be noted that different access mode permission sets and account permission sets can be set as needed, and the permission items corresponding to a certain operation that can be configured for each permission set are not limited to the permission items shown in the table.

Referring to FIG. 5, the multi-access-mode permission management method in this embodiment includes the following steps:
S1: the control module of the circuit breaker controller responds to a communication request of the input module or the access module;
S2: the control module acquires an access mode and acquires an access mode permission set corresponding to this access mode based on the access mode as a first candidate permission set; the control module determines the access mode based on a physical access mode of the communication request, e.g., via the HMI liquid crystal touch screen or NFC or a Bluetooth module (the mobile phone APP is connected via Bluetooth) or via a USB interface (PC host computer software) or via a RS485/HPLC/CAN wired communication interface, and the control module may determine the access mode through a corresponding IO interface; and/or when the access mode cannot be determined through the physical access mode, the control module may send an inquiry command to the input module or the access module, verify information fed back by the input module or the access module, and determine the access mode; and if there is no access mode permission set corresponding to the access mode, the access mode permission set does not need to be considered, and only a user permission set needs to considered according to the original embodiment, or all permission items may also form the first candidate permission set;
S3: the control module checks whether the "password-free mode" is enabled; if yes, the first candidate permission set is taken as the current user permission set, and it jumps to step S6; if not, it jumps to step S4;
S4: the control module inquires the input module or the access module for the input account (account number and password); the input module or the access module displays the corresponding account input interface; the input module or the access module transmits the input account to the control module; the control module compares the input account with each permission account stored locally in the controller until it finds the a permission account identical to the input account and acquires the permission set corresponding to this permission account as a second candidate permission set; if the input account is different from all permission accounts, it exits or a prompt of "Password Error" is given;
S5: in the presence of the first candidate permission set, an intersection of permission items in the first candidate permission set and permission items in the second candidate permission set is taken as the current user permission set; and
S6: the corresponding operation interface is displayed or the user operation is authenticated based on the current user permission set, and the user is allowed only to perform operations allowed in the current user permission set.

For example, when the user uses the mobile phone APP to connect with the circuit breaker controller via wireless Bluetooth and inputs an account to log in, the circuit breaker controller acquires the mobile phone APP permission set as the first candidate permission set based on an mobile phone APP-based access mode, and acquires the low-level permission set corresponding to this permission account as the second candidate permission set based on the input account being identical to one of the permission accounts stored locally in the controller. The intersection of the permission items in the first candidate permission set and the permission items in the second candidate permission set is taken as the current user permission set. The operation interface with the user's operation permission is displayed only based on the current user permission set, or all the operation interfaces are displayed, without executing the operations selected by the user. For example, the low-level permission set has no firmware upgrade permission, but the mobile phone APP access mode has a firmware upgrade function. The mobile phone APP will not display the firmware upgrade function after logging in through a low-level permission account. For example, if the acquired second candidate permission set is a high-level permission set with fault recording analysis, but the mobile phone APP access mode has no fault recording analysis function, the mobile phone APP will not display the fault recording analysis function. It should be noted that step S2 may also be performed between step S4 and step S5.

Compared with the prior art, the circuit breaker permission management method in this embodiment adopts classified permission management, and does not need to set complex user management functions and redundant user names, thereby simply and quickly realizing the hierarchical management of circuit breaker functions, and also providing access mode permission sets corresponding to access modes. Permission control is implemented through the combination of access mode permission sets corresponding to a plurality of access modes, which not only gives full play to the functions provided by different access modes more reasonably, but also does not require additional user input from users, and does not need to set different users or passwords for access modes, thereby improving the security and also enhancing the user experience.

In the foregoing embodiment, the HMI liquid crystal touch screen, the NFC and the mobile phone APP are directly connected with the circuit breaker controller through Bluetooth or a PC host computer via USB or RS485 and CAN. However, it should be noted that the communication module of the circuit breaker controller in this embodiment may also include an Internet of Things module, so that the circuit breaker has a function of connecting to the Internet. The Internet of Things module may be a 2G module/NB module/4G or wifi module, etc.

A plurality of circuit breakers can be managed at the same time through an Internet of Things cloud platform website. A platform user account can be bound to a circuit breaker device ID and a communication address. The permission management of the circuit breaker can be configured on a webpage side, the passwords of the permission account can be modified, and the permission set corresponding to the permission account can be set. After the password is modified on the webpage side, the information is synchronized to the corresponding circuit breaker through the Internet of Things module, and a series of operation methods, such as the user logging in to the circuit breaker again, are consistent with the above methods. Of course, in practical applications, the modification of the password of the permission account and the configuration of the permission set will not be frequently performed, so the cost of the Internet of Things module is also increased, so the Internet of Things module and the Internet of Things cloud platform website can also be omitted. Moreover, after connecting to the Internet, the risk of network attacks on the circuit breaker and the possibility of account information leakage and malicious control of the circuit breaker are increased, which is easy to cause security accidents and property losses.

It should be explained that, in the description of the present invention, the terms such as "up", "down", "left", "right", "inner" and "outer" indicating the directional or positional relations on the basis of the directional or positional relations shown in the drawings are only used for conveniently describing the present invention and simplifying the description, not indicate or imply that the referred devices or elements must have a specific orientation and be configured and operated in a specific direction; therefore, they cannot be construed as a limitation on the present invention.

We have made further detailed description of the present invention mentioned above in combination with specific preferred embodiments, but it is not deemed that the specific embodiments of the present invention is only limited to these descriptions. A person skilled in the art can also, without departing from the concept of the present invention, make several simple deductions or substitutions, which all be deemed to fall within the protection scope of the present invention.

## Claims

1. A circuit breaker permission management method, wherein a circuit breaker at least stores a plurality of permission accounts and at least three permission sets, wherein each permission account at least corresponds to one permission set, and each permission account corresponds to one permission set; and the circuit breaker permission management method comprises the following steps:
S1: acquiring an input account, and comparing and verifying the input account sequentially with all the permission accounts until a permission account identical to the input account is found;
S2: acquiring a permission set corresponding to the permission account identical to the input account as a current user permission set; and
S3: displaying an operation interface based on the current user permission set, and/or authenticating user operation.

2. The circuit breaker permission management method according to claim 1, wherein in step S1, an error prompt is given if the permission account identical to the input account is not found, and/or S 1 exits.

3. The circuit breaker permission management method according to claim 1, wherein the circuit breaker also stores at least two sets of access mode permission sets corresponding to an access mode; and
in step S2, the permission set corresponding to the permission account identical to the input account is acquired as a second candidate permission set; an access mode for accessing the circuit breaker is also acquired, and a corresponding access mode permission set is acquired as a first candidate permission set based on the access mode; and an intersection of permission items in the first candidate permission set and the permission items in the second candidate permission set is taken as the current user permission set.

4. The circuit breaker permission management method according to claim 3, wherein the access mode comprises at least two of the following: an NFC, handheld test equipment, an HMI interface, a mobile phone APP, a PC host computer, HPLC, a CAN bus, and RS485; the corresponding access mode permission set comprises at least two of the following: an NFC permission set, a handheld test equipment permission set, an HMI interface permission set, a mobile phone APP permission set, a PC host computer permission set, an HPLC permission set, a CAN permission set and an RS485 permission set; and the at least two access mode permission sets are in one-to-one correspondence with the at least two access modes.

5. The circuit breaker permission management method according to claim 3, wherein the permission set and the access mode permission set each comprises a plurality of permission items; and each permission set and each access mode permission set comprise one or more permission items among "fault query", "parameter query", "test tripping", "exporting system log file", "fault recording analysis", "firmware upgrade", "system setting" and "protection setting", respectively.

6. The circuit breaker permission management method according to claim 1, wherein the three permission sets stored by the circuit breaker are respectively a high-level permission set, an intermediate permission set and a low-level permission set; the plurality of permission accounts stored by the circuit breaker comprises at least one high-level permission account corresponding to the high-level permission set; and the high-level permission set comprises permission management permission items, which have a permission to modify a password corresponding to each permission account, a permission to open or close other permission account functions, and a permission to associate the other permission accounts with the corresponding permission set.

7. The circuit breaker permission management method according to claim 1, wherein the permission account and the input account are either a text password comprising an account number and a password, or a fingerprint password, or a face recognition password, or a voiceprint password, or an NFC card.

8. A circuit breaker, comprising a control module, and a storage module, an input module and a communication module that are connected with the control module respectively, wherein the input module is configured to interact with the control module; the control module can be in communication connection with the access module through the communication module; and the control module performs the circuit breaker permission management method according to any one of claims 1 to 7.

9. The circuit breaker according to claim 8, wherein the input module comprises one or more of the following: an HMI liquid crystal touch screen, a fingerprint collection module, a voice command collection module, a face recognition collection module, an NFC communication module, and an infrared communication module.

10. The circuit breaker according to claim 8, wherein the circuit breaker comprises a controller and a circuit breaker body; the control module, the storage module, the input module and the communication module are arranged in the controller; the controller further comprises a sampling circuit and an execution driving circuit that are respectively connected to the control module; the control module drives a closing mechanism and an opening mechanism by the execution driving circuit, such that the circuit breaker body performs opening and closing operations; the sampling circuit is configured to collect a current and/or voltage signal of a main circuit of the circuit breaker body and transmit the current and/or voltage signal to the control module; and when the control module determines that the circuit has a fault based on the signal collected by the sampling circuit, the circuit breaker body is driven by the execution driving circuit to perform the opening operation.
